# EUROPÄISCHE PATENTSCHRIFT

(11) **EP 2 774 878 B1**
(45) Veröffentlichungstag und Bekanntmachung des Hinweises auf die Patenterteilung: **20.05.2015**
(21) Anmeldenummer: 13158425.2
(22) Anmeldetag: 08.03.2013
(51) Int. Cl.: B65G 47/86, B67C 3/24

(54) **Greifarm für eine Greifeinrichtung und Vorrichtung zum Transportieren von Behältern mit dergleichen Greifarmen**
Gripping arm for a gripping device and machine for transporting containers by means of such gripping arms
Bras de préhension pour un dispositif de préhension ainsi que la machine pour transporter des récipients au moyen de ces bras de préhension

(43) Veröffentlichungstag der Anmeldung: 10.09.2014
(73) Patentinhaber: Tyrolon-Schulnig GmbH, 6395 Hochfilzen (AT)
(72) Erfinder: Schulnig, Elmar, Ludwig, 6391 Fieberbrunn (AT)
(74) Vertreter: Rupprecht, Kay

(56) Entgegenhaltungen:
- EP-A1- 2 159 172
- EP-A1- 2 343 255
- EP-A1- 2 548 824
- EP-A2- 2 143 674
- EP-B1- 1 868 746
- DE-A1- 19 542 518
- DE-A1-102008 055 617
- DE-A1-102010 052 348

## Beschreibung

Die vorliegende Erfindung betrifft einen Greifarm für eine Greifeinrichtung zum Greifen, Halten und/oder Führen von insbesondere kleinen und im Wesentlichen rund geformten Behältern, sowie eine Greifeinrichtung, eine Transportvorrichtung, ein Verfahren zum Herstellen eines Greifarms und ein Verfahren zum Transportieren wenigstens eines Behälters mit einem Greifarm.

Greifeinrichtungen zum Greifen, Halten und/oder Führen von insbesondere kleinen und im Wesentlichen rund geformten Behältern sind bereits aus dem Stand der Technik bekannt und werden bei der fließbandtechnischen Bearbeitung von Behältern verwendet.

Die Druckschrift EP 2 548 824 offenbart einen Greifarm für eine Greifeinrichtung zum Greifen, Halten und/oder Führen von insbesondere kleinen und im Wesentlichen rund geformten Behältern, wobei der Greifarm wenigstens eine Bohrung zur zumindest teilweisen Aufnahme eines Lagerbolzens aufweist, mittels dessen der Greifarm in der Greifeinrichtung schwenkbar, insbesondere schwenkbar befestigbar ist, wobei die Greifeinrichtung wenigstens einen drehbar gelagerten Steuernocken aufweist. Die Greifeinrichtung verfügt dazu über ein Öffnungsmittel, welches aus einem Paar einander abstoßender Permanentmagneten ausgebildet ist.

Die Druckschrift EP 2 143 674 A2 betrifft einen Greifarm für eine Greifeinrichtung zum Halten von insbesondere kleinen und im Wesentlichen rund geformten Behältern, wobei der Greifarm wenigstens eine Bohrung zur zumindest teilweisen Aufnahme eines Lagerbolzens aufweist, mittels dessen der Greifarm in der Greifeinrichtung schwenkbar, insbesondere schwenkbar befestigbar ist, wobei die Greifeinrichtung wenigstens einen drehbar gelagerten Steuernocken aufweist. Die Greifeinrichtung mit Greifweiten-Variation hat den Zweck, unterschiedliche Behältergrößen funktionssicher zu greifen. Dazu verfügt die Greifeinrichtung über eine mehrteilige Schließhebel-Konstruktion, bei der ein Öffnungsmittel, welches sich beispielsweise aus zwei zusammenwirkenden Permanentmagneten zusammensetzen kann, an einer Innenseite eines zusätzlichen Arms der Schließhebel-Konstruktion und damit an einer an der Greifarm-Innenseite liegenden Seite angeordnet ist.

Unter dem Begriff "Behälter" sind im Zusammenhang mit der vorliegenden Erfindung insbesondere, aber nicht ausschließlich kleine Behälter mit einem im Wesentlichen kreisförmigen Querschnitt zu verstehen, z. B. Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Beim Reinigen, Befüllen oder Verschließen werden die Behälter bei einer Eingangsstation mittels einer Greifeinrichtung mit mindestens einem Greifarmpaar gegriffen und zur nächsten Station im Bearbeitungsprozess transportiert. Eine solche Greifeinrichtung für ein Behältertransportsystem besitzt wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Fläschchen - um den Bauch des Behälters. Ein Steuernocken fungiert hierfür als Öffnungsmittel und eine Spiralfeder als Schließmittel der Greifeinrichtung. Die Federkraft der Spiralfeder dient dabei nicht nur dem Schließen der Greifeinrichtung, sondern auch dem kraftschlüssigen Halten des Behälters. Daher ist die Federkraft entsprechend groß.

Wenn die Greifeinrichtung durch den Steuernocken geöffnet wird, wird eine Kraft gegen eine Greifarminnenseite des Greifarms entgegen der Federkraft aufgewendet. Allerdings werden durch die zusätzlichen Komponenten des Greifarms die Komplexität und somit der Herstellungs-, Wartungs- und Reinigungsaufwand einer Greifeinrichtung erhöht. Der sich auf den Greifarmpaaren sammelnde Schmutz befindet sich insbesondere in Vertiefungen und zwischen den Komponenten und ist bei hygienesensitiven Vorgängen wie dem Abfüllen von Medikamenten oder Hygienemitteln nachteilig. Außerdem ist eine Verkleinerung des Greifarms, die beim Führen und Halten von kleinen Fläschchen bevorzugt ist, wegen der Spiralfeder nicht ohne weiteres möglich. Die zusätzlichen Komponenten verhindern somit eine Miniaturisierung der Greifeinrichtung.

Daher bringt der Betrieb einer aus dem Stand der Technik bekannten Greifeinrichtung einen erhöhten Herstellungs-, Wartungs- und Reinigungsaufwand mit sich, was sich insbesondere beim Einsatz in Bereichen wie dem industriellen Abfüllen von Medikamenten oder Hygienemitteln als nachteilig erweist. Zum anderen ist die Verkleinerung des Greifarms für das Halten von zum Beispiel Medikamentenfläschchen nicht ohne weiteres möglich.

Es ist daher die Aufgabe der vorliegenden Erfindung, einen Greifarm für eine Greifeinrichtung, sowie eine Greifeinrichtung, eine Transportvorrichtung, ein Verfahren zum Herstellen eine Greifarms und ein Verfahren zum Transportieren wenigstens eines Behälters mit einem Greifarm der eingangs genannten Art in vorteilhafter Weise weiterzubilden, insbesondere dahingehend, dass eine Miniaturisierung des Greifarms ermöglicht wird und dass insbesondere das Anhaften von Verschmutzungen vermindert und die Greifeinrichtung wartungsarm ist.

Diese Aufgabe wird erfindungsgemäß durch einen Greifarm mit den Merkmalen des Anspruchs 1 gelöst. Danach ist vorgesehen, dass ein Greifarm für eine Greifeinrichtung zum Greifen, Halten und/oder Führen von insbesondere kleinen und im Wesentlichen rund geformten Behältern bereit gestellt wird, wobei die Greifeinrichtung wenigstens einen drehbar gelagerten Steuernocken aufweist, wobei der Steuernocken derart beschaffen und ausgebildet ist, dass mittels des Steuernockens bzw. Drehung des Steuernockens der Greifarm von wenigstens einer ersten Stellung, insbesondere einer Greifstellung, in wenigstens eine zweite Stellung, insbesondere eine Öffnungsstellung, und/oder umgekehrt bewegbar ist, wobei der Greifarm wenigstens eine Bohrung zur zumindest teilweisen Aufnahme eines Lagerbolzens aufweist, wobei der Lagerbolzen derart beschaffen ist, dass der Greifarm in der Greifeinrichtung schwenkbar, insbesondere schwenkbar befestigbar ist, und wobei der Greifarm weiter wenigstens eine Aufnahme für ein Schließmittel aufweist, wobei das Schließmittel derart ausgebildet ist, dass mittels des Schließmittels der Greifarm von der zweiten Stellung, insbesondere der Öffnungsstellung, in die erste Stellung, insbesondere die Greifstellung, und/oder umgekehrt bewegbar ist, und wobei die wenigstens eine Aufnahme derart gestaltet ist, dass das Schließmittel von einer Greifarmaußenseite aus in die wenigstens eine Aufnahme einsetzbar ist.

Der erfindungsgemäße Greifarm bietet zunächst den Vorteil, dass eine Miniaturisierung eines Greifarms für eine Greifeinrichtung ermöglicht wird und dass insbesondere das Entstehen von Verschmutzungen vermindert und die Greifeinrichtung insbesondere wartungsarm ist. Denn die erfindungsgemäße Ausgestaltung des Greifarms ermöglicht es, auf die bislang verwendeten Spiralfedern verzichten zu können, so dass eine Miniaturisierung ermöglicht wird. Der einfache Aufbau des Greifarms erlaubt es ferner, dass das Entstehen von Verschmutzungen insbesondere im Betrieb der Vorrichtung vermindert und die Greifeinrichtung erst nach längeren Zeiträumen gereinigt werden muss und daher wartungsarm ist.

Des Weiteren bietet der erfindungsgemäße Greifarm den Vorteil, dass Vertiefungen, in denen sich vorzugsweise Schmutz, Staub und/oder andere Verschmutzungen sammeln, von den zu greifenden Behältern abgewandt sind. Hierdurch ergibt sich eine Greifeinrichtung, die höchsten Hygieneanforderungen gerecht wird, weil die Greifeinrichtung mit Greifarmen versehen sein kann, die keinen bzw. wenig Schmutz anziehen bzw. nicht zur Verschmutzung an prozessrelevanten Stellen neigen. Damit einher ergeht eine erhebliche Reduzierung der Reinigungsarbeiten, da der Greifarm mit weniger Komponenten konzipiert ist. Im Ergebnis werden die Ansatzflächen für Keime und Verschmutzungen wie z.B. Oberflächenvertiefungen erheblich reduziert.

Schließlich ist als Vorteil des erfindungsgemäßen Greifarms zu nennen, dass durch die Anordnung des Schließmittels von der Greifarmaußenseite aus in der Aufnahme die Wartungs- und Reparaturanfälligkeit reduziert werden. Das Schließmittel kann weder mit dem zu greifenden Behälter noch mit dem komplementären Greifarm des gleichen Greifarmpaares absichtlich oder unabsichtlich in Kontakt kommen und wird somit vor Schäden geschützt.

Die Greifeinrichtung ist insbesondere Teil einer Transportvorrichtung, die im Zusammenhang mit dem Reinigen, Befüllen oder Verschließen von Behältern den Behälter greifen und zur nächsten Station im Prozess transportieren.

Vorteilhafte Weiterbildungen der Erfindung sind in den Unteransprüchen angegeben. So ist beispielsweise vorgesehen, dass der Greifarm wenigstens einen Greifabschnitt aufweist, wobei der Greifabschnitt derart beschaffen und ausgebildet ist, dass er in der ersten Stellung, insbesondere der Greifstellung, zum Halten oder Führen eines Behälters geeignet ist und dienen kann.

Vorteilhafterweise weist der Greifarm wenigstens einen Führungsabschnitt mit wenigstens einer an der Greifarminnenseite angeordneten Ausbuchtung auf, die zum Zusammenwirken mit dem wenigstens einen Steuernocken angepasst ist, wobei vorzugsweise der wenigstens eine Führungsabschnitt zwischen dem wenigstens einen Greifabschnitt und der wenigstens einen Bohrung angeordnet ist.

Dank der Ausbuchtung kann der Durchmesser des Steuernockens im Vergleich zum Stand der Technik kleiner bzw. gleich ausgebildet sein. Bei kleinerem Durchmesser des Steuernockens verringert sich der Hebelarm des Steuernockens am Greifarm. Damit ist auch weniger Kraft für das Öffnen der Greifeinrichtung notwendig und weniger Materialabrieb des Greifarms absehbar. Zusätzlich kann die Länge des Greifarms nun gekürzt werden, da sowohl die Aufnahme des Schließmittels als auch die Ausbuchtung entlang der Länge des Greifarms auf gleicher Höhe bzw. im Wesentlichen auf einer Ebene senkrecht zur Länge des Greifarms liegen können.

Es hat sich des Weiteren als vorteilhaft erwiesen, dass der wenigstens eine Greifabschnitt in einer Greifstellung zum Halten oder Führen des Behälters dient, wobei der wenigstens eine Führungsabschnitt zwischen dem wenigstens einen Greifabschnitt und der wenigstens einen Bohrung angeordnet ist. Durch die derartige Anordnung des wenigstens einen Führungsabschnitts beim Greifarm ist an einer montierten Greifeinrichtung in einer Transportvorrichtung besser erkennbar, wie stark der Materialabrieb bei dem wenigstens einen Führungsabschnitt des Greifarms ist.

Vorzugsweise weist das Schließmittel zum Bewegen des wenigstens einen Greifabschnitts des Greifarms von der Öffnungsstellung in die Greifstellung wenigstens einen, insbesondere mit einer Kunststoffschicht ummantelten, Magneten auf. Auf Grund der unterschiedlichen Polung eines wenigstens einen Magneten eines korrespondierend angeordneten, auch als komplementär bezeichneten, Greifarms in derselben Greifeinrichtung ziehen sich die Magnete der beiden Greifarme an und schließen die Greifeinrichtung. Durch den wenigstens einen Magneten wird es einfacher, den wenigstens einen Steuernocken zwischen die Aufnahmen eines Greifarmpaares anzuordnen und die Greifeinrichtung zusätzlich zu verkleinern. Durch das Einhüllen des wenigstens einen Magneten in eine Kunststoffhülle wird der Abrieb und/oder Korrosion des wenigstens einen Magneten erheblich reduziert bzw. sogar vermieden und jegliches restliche Abriebmaterial wird in der Kunststoffhülle aufgefangen. Dadurch trägt diese Weiterbildung der Erfindung in hohem Maße zur Reinheit der Gesamtvorrichtung bei. Außerdem wird der wenigstens eine Magnet vor äußeren Schlägen, sowie vor Feuchtigkeit und Korrosion geschützt, die die Magnetkraft beeinträchtigen können.

In einer weiteren Ausführungsform weist der Greifarm zwischen der wenigstens einen Bohrung und dem wenigstens einen Greifabschnitt wenigstens ein Sackloch als die wenigstens eine Aufnahme für den Magneten auf, in welches der wenigstens eine Magnet beim Zusammenbau des Greifarms einsetzbar ist. Die Befestigung der Magnete bei den bekannten Greifarmen ist relativ aufwändig und kann mittels Verschweißung oder Verschraubung erfolgen. Bei der Verschweißung entsteht Hitze, die wiederum die Magnetstärke erheblich schwächt. Die Verschraubung zieht andererseits Verschmutzungen an. Das wenigstens eine Sackloch ist demgegenüber so dimensioniert, dass es den wenigstens einen Magneten ohne weitere Befestigungsmittel sicher hält. Allerdings kann das wenigstens eine Sackloch auch einen überstehenden Rand oder eine an der Innenseite des Sacklochs angeordnete, mit einer Kerbe des Magneten zusammenwirkende Ausbuchtung aufweisen, wodurch der Magnet arretiert und am Herausfallen gehindert wird. Im Hinblick auf die aus dem Stand der Technik bekannten Verschraubungen schafft diese vorteilhafte Weiterbildung des erfindungsgemäßen Greifarms Abhilfe. Da in den in Rede stehenden Vorrichtungen immer ein Paar der erfindungsgemäßen Greifarme eingesetzt wird, sei der guten Ordnung halber darauf hingewiesen, dass - wie aus dem Stand der Technik hinlänglich bekannt - die sich gegenüberliegenden Pole der Magnete entgegengesetzt gepolt sein müssen, damit sich die beiden Magnete zum Schließen des Greifarmpaares auch anziehen.

Des Weiteren kann der Greifarm vorteilhafterweise einteilig bzw. einstückig aus Kunststoff, insbesondere aus faserverstärktem Polyetheretherketon, gefertigt sein. Herkömmliche Greifarme bestehen aus Edelstahl und sind deshalb relativ teuer, wobei sich darüber hinaus im Betrieb der in Rede stehenden Greifeinrichtungen gezeigt hat, dass sich die metallischen Greifarme gelegentlich verbiegen, was zum einen beim Betrieb der Greifeinrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Dann kann der Greifarm aufgrund seiner einstückigen Ausbildung sehr rasch und kostengünstig ersetzt werden. Als vorteilhafter Kunststoff hat sich faserverstärktes Polyetheretherketon (PEEK) erwiesen, da es eine gute Steifigkeit bei gleichzeitiger ausreichender Biegsamkeit aufweist. PEEK ist ein hochtemperaturbeständiger thermoplastischer Kunststoff und die Faserverstärkung ermöglicht einen Faser-Kunststoff-Verbund aus hoher spezifischer Steifigkeit und Festigkeit. Kunststoff zeigt im Gegensatz zu herkömmlich verwendeten Metall bzw. Edelstahl kaum Verschleißerscheinungen bei der Reinigung mit Wasser. Durch einen durch Kunststoff geformten Greifarm entsteht ein leicht austauschbares Produkt, das nach seiner Abnutzung ohne Probleme entfernt und ohne große Kosten oder Lieferzeiten ersetzt werden kann.

Damit die Bewegung der Greifabschnitte der jeweiligen Greifarme von der Öffnungsstellung in die Greifstellung als auch umgekehrt von den Greifarmen gleichmäßig ausgeführt wird und die Auslenkung der beiden Greifarme durch die Schwenkung spiegelbildlich erfolgt, weist der Greifarm wenigstens einen Verzahnungsabschnitt mit zumindest segmentweise koaxial um die Bohrung angeordneten Zähnen zum synchronen Schwenken des Greifarms mit einem korrespondierend angeordneten Greifarm auf. Dabei greifen die Zähne der beiden Verzahnungsabschnitte des Greifarmpaares ineinander. Je kürzer die Zähne sind, desto näher liegen sich die Greifarme eines Greifarmpaars gegenüber, damit die Zähne ineinandergreifen können.

Die Erfindung betrifft des Weiteren eine Greifeinrichtung mit den Merkmalen des Anspruchs 8. Danach ist vorgesehen, dass die Greifeinrichtung mit wenigstens einem Greifarm nach einem der Ansprüche 1 bis 7 versehen ist und dem Greifen, Halten und/oder Führen von insbesondere kleinen und im Wesentlichen rund geformten Behältern dient, wobei die Greifeinrichtung wenigstens einen drehbar gelagerten Steuernocken aufweist, wobei der Steuernocken derart beschaffen und ausgebildet ist, dass mittels des Steuernockens bzw. einer Drehung des Steuernockens der Greifarm von wenigstens einer ersten Stellung, insbesondere einer Greifstellung, in wenigstens eine zweite Stellung, insbesondere eine Öffnungsstellung, und/oder umgekehrt bewegbar ist.

Insbesondere kann vorgesehen sein, dass die Greifeinrichtung ein Greifarmpaar umfassend wenigstens zwei Greifarme, insbesondere wenigstens zwei Greifarme nach einem der Ansprüche 1 bis 7, aufweist und dass zwischen den wenigstens zwei Aufnahmen des Greifarmpaars der wenigstens eine Steuernocken angeordnet ist.

Mit dem Ziel die Auslenkung des Greifarmpaares zu maximieren und die Greifarme selbst so klein wie möglich zu konstruieren, ist der wenigstens eine Steuernocken vorteilhafterweise zwischen den wenigstens zwei Aufnahmen des Greifarmpaars angeordnet. Somit können die Ausbuchtungen, die Aufnahmen und der wenigstens eine Steuernocken des Greifarmpaares auf einer Linie liegen und insgesamt platzsparend angeordnet werden, ohne sich in ihrer Funktion zu behindern.

Die Erfindung betrifft des Weiteren eine Transportvorrichtung mit den Merkmalen des Anspruchs 10. Danach ist vorgesehen, dass eine Transportvorrichtung zum Transportieren von Behältern einen oder mehrere Greifarme nach einem der Ansprüche 1 bis 7 und/oder einen oder mehrere Greifeinrichtungen nach Anspruch 8 oder 9 aufweist.

Vorzugsweise sind die Greifarme paarweise zueinander angeordnet und jeweils komplementär zueinander ausgebildet, so dass jeweils zwei Greifarminnenseiten und zwei Greifarmaußenseiten einander zugewandt sind. Daher sind immer ein erster Greifarm, ein zweiter Greifarm, ein erster Greifarm, etc. abwechselnd auf einer Transportvorrichtung angeordnet, wobei der zweite Greifarm komplementär bzw. spiegelverkehrt zum ersten Greifarm ausgebildet ist. Ein Greifarmpaar wird aus einem ersten und einem benachbarten zweiten Greifarm gebildet. Um einen Behälter zu greifen bzw. zu halten, müssen die wenigstens zwei Greifarme eines Greifarmpaares oder einer Greifeinrichtung komplementär zueinander ausgebildet sein, wobei deren Greifarminnenseiten einander zugewandt sind. Die direkt nebeneinander liegenden Greifarme zweier benachbarter Greifarmpaare oder Greifeinrichtungen sind mit deren Greifarmaußenseite einander zugewandt.

Um eine Unwucht bei der Transportvorrichtung zu vermeiden, sind die Greifarme oder die Greifeinrichtungen kreisförmig um eine Drehachse der Transportvorrichtung angeordnet. Die Greifarme oder die Greifeinrichtungen, insbesondere deren Lagerbolzen und Steuernocken, sind dabei im gleichen Abstand zu deren arten- bzw. funktionsgleichen Nachbarn und äquidistant zur Drehachse angeordnet. Dabei werden die Greifarme unter anderem direkt oder mittels eines Trägerelements auf einer Trägerplatte angeordnet.

Es ist ferner möglich, dass ein Aktivierungselement und eine Trägerplatte vorgesehen sind, wobei der/die Lagerbolzen und die Steuernocke(n) mit dem Aktivierungselement direkt in/an die/der Trägerplatte angeordnet bzw. montiert sind.

Um die Schließkraftkraft der Magneten als Schließmittel zu verbessern, sind die Magnete der Greifarme derart gepolt, dass sich die benachbarten Greifarme zweier nebeneinander angeordneten Greifarmpaare oder Greifeinrichtungen abstoßen und dass sich die Greifarme eines Greifarmpaares oder einer Greifeinrichtung anziehen. Auf Grund dieser charakteristischen Merkmale lässt sich die Transportvorrichtung, auch "Klammerstern" oder "Mini-Klammerstern" genannt, leichter verkleinern.

Des Weiteren betrifft die Erfindung ein erfindungsgemäßes Verfahren zum Herstellen eines erfindungsgemäßen Greifarms, der einstückig in einem Spritzgussverfahren aus Kunststoff hergestellt wird, wobei zur Fertigstellung des Greifarms wenigstens ein Magnet in die wenigstens eine Aufnahme eingesetzt wird. Die Vorteile ergeben sich aus den Merkmalen des zuvor beschriebenen Greifarms.

Zusätzlich betrifft die Erfindung ein Verfahren zum Transportieren von Behältern mit einem erfindungsgemäßen Greifarm und/oder einer Greifeinrichtung und/oder einer Transportvorrichtung, worin zum Überführen in die Greifstellung sich die Schließmittel eines Greifarmpaares anziehen und die Schließmittel zweier benachbarter Greifarme zweier nebeneinander angeordneten Greifarmpaare abstoßen.

Weitere Aspekte der Erfindung werden im Folgenden erläutert:

In einer Ausführungsform ist das Schließmittel nur von der Greifarmaußenseite und nicht von der Greifarm-Innenseite einsetzbar. Des Weiteren ist die Aufnahme nur zur Greifarmaußenseite hin bzw. nicht zur Greifarm-Innenseite hin geöffnet.

Vorzugsweise weist die Transportvorrichtung eine gerade Anzahl an Greifeinrichtungen auf. Dadurch wird sichergestellt, dass durch die abwechselnde Polarisierung der Magnete die Anziehungswirkung zwischen zwei Greifarmen einer Greifeinrichtung und die Abstoßwirkung zwischen zwei benachbarten Greifarmen zweier Greifeinrichtungen bei allen Greifarmen einer Transportvorrichtung wie erwünscht auftreten.

Des Weiteren weist die Transportvorrichtung eine Vielzahl an darauf konzentrisch befestigten Trägerelementen auf, die jeweils Teil einer Greifeinrichtung mit entsprechenden Lagerbolzen und Steuernocken für wenigstens ein Greifarmpaar sind. Die Trägerelemente ermöglichen den Austausch einer kompletten, funktionsfähigen Greifeinrichtung, ohne dass die Transportvorrichtung selbst ausgetauscht oder vollständig zerlegt werden muss.

Mit dem Ziel einer leichten Anwendungsanpassung in einem Betrieb können eine Vielzahl von erfindungsgemäßen Transportvorrichtungen aufeinander gesteckt bzw. gestapelt werden. Diese bilden einen Stapel von aufeinander angeordneten Transportvorrichtungen.

Des Weiteren kann eine weitere Transportvorrichtung auf einer Drehachse und oder auf den Lagerbolzen der erfindungsgemäßen Transportvorrichtung angeordnet und befestigt werden. Dazu weist die weitere Transportvorrichtung Vertiefungen oder Bohrungen auf, der die Drehachse und/oder die Lagerbolzen der erfindungsgemäßen Transportvorrichtung aufnehmen kann. Durch die Verwendung der Lagerbolzen als Verbindungsmittel sind keine weiteren Elemente für die Verbindung der beiden Transportvorrichtungen mehr notwendig, was die Anfälligkeit und den Aufwand bei der Produktion, Betrieb und Wartung der Transportvorrichtung reduziert. Vorzugsweise wird die weitere Transportvorrichtung nur auf der Drehachse der erfindungsgemäßen Transportvorrichtung befestigt. Dabei ist der Abstand der beiden Transportvorrichtungen dergestalt ausgeformt ist, dass die Greifarme der erfindungsgemäßen Transportvorrichtung von den Lagerbolzen gezogen werden können, ohne dass es zuerst notwendig ist, die weitere Transportvorrichtung anzuheben oder die Lagerbolzen von der erfindungsgemäßen Transportvorrichtung zu entfernen. Die Verbindung zweier Transportvorrichtungen erfolgt vorzugsweise durch Formschluss der Drehachse und/oder der Lagerbolzen und/oder anderer Verbindungsstifte der einen Transportvorrichtung mit Vertiefungen oder Bohrungen der anderen Transportvorrichtung.

Weitere Einzelheiten und Vorteile der Erfindung sollen nun anhand eines in der Zeichnung dargestellten Ausführungsbeispiels näher erläutert werden.

Es zeigen:
- Fig. 1: eine Draufsicht auf eine Greifeinrichtung mit einem erfindungsgemäßen Greifarm;
- Fig. 2.: einen Querschnitt durch die Greifeinrichtung;
- Fig. 3: eine erste perspektivische Ansicht der Greifeinrichtung;
- Fig. 4: eine zweite perspektivische Ansicht der Greifeinrichtung;
- Fig. 5: eine Draufsicht auf eine erfindungsgemäße Transportvorrichtung mit acht Greifeinrichtungen; und
- Fig. 6: eine perspektivische Ansicht der erfindungsgemäßen Transportvorrichtung.

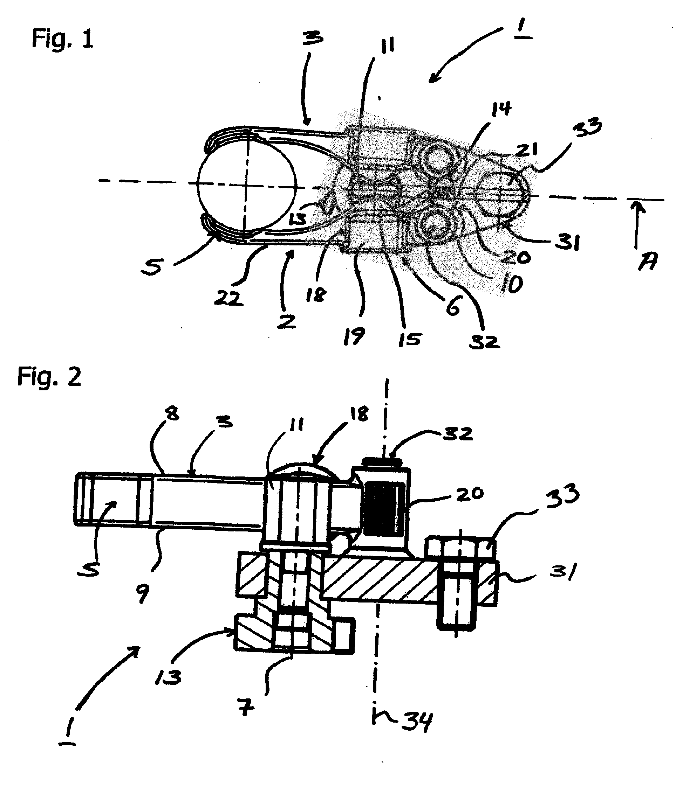

In Figur 1 wird eine Greifeinrichtung 1 mit einem erfindungsgemäßen Greifarm 2 und einem komplementären Greifarm 3 in der Draufsicht dargestellt. Die Greifeinrichtung 1 zum Greifen, Halten und Führen von insbesondere flaschenartigen Behältern weist zum Bewegen eines Greifabschnitts 5 des Greifarms 2 von einer Greifstellung in eine Öffnungsstellung einen drehbar gelagerten Steuernocken 11 auf, der über eine - hier nicht dargestellte - Steuerachse 7 gedreht wird. Der Greifarm 2 weist eine Bohrung 10 zur Lagerung eines Lagerbolzens 32 zum schwenkbaren Befestigen des Greifarms 2 in der Greifeinrichtung 1 und eine Aufnahme 18 für ein Schließmittel 6 zum Bewegen des Greifabschnitts 5 des Greifarms 2 von der Öffnungsstellung in die Greifstellung auf. Der rechte Greifarm 3, auch komplementärer oder korrespondierender Greifarm 3 genannt, weist im Wesentlichen die gleichen Merkmale wie der linke Greifarm 2 auf und entspricht, bis auf einen Verzahnungsabschnitt 20, einem Spiegelbild einer Ausführungsform des Greifarms 2 an einer durch die Referenz 'A' markierte Querschnittsebene. Die Querschnittsebene A entspricht in der Draufsicht betrachtet einer Symmetrieachse der Greifeinrichtung 1, die mittig durch den Steuernocken 11, die Befestigungsschraube 33 und den zu haltenden Behälter verläuft. Die Greifarme 2 und 3 als auch die Lagerbolzen 32 haben jeweils den gleichen Abstand zur Querschnittsebene A.

Des Weiteren weist der Greifarm 2 einen Führungsabschnitt 14 mit einer an der Greifarminnenseite 23 angeordneten Ausbuchtung 15 auf, die mit dem Steuernocken 11 zum Öffnen der Greifeinrichtung 1 zusammenwirkt. Die Greifarminnenseite 23 ist insbesondere die Fläche, die auf den zu greifenden Behälter, den Steuernocken 11 und den korrespondierenden Greifarm 3 gerichtet ist, und erstreckt sich im Wesentlichen von einer Spitze bis einem Ende des Greifarms 2. Die Greifarmaußenseite 22 liegt der Greifarminnenseite 23 am selben Greifarm gegenüber und erstreckt sich entsprechend von der Spitze bis zum Ende des Greifarms 2. Die Spitze des Greifarms 2 ist gleich einer Spitze des Greifabschnitts 5 und das Ende der Greifarms 2 ist gleich einer Außenwand der Bohrung 10. Der Führungsabschnitt 14 ist kontinuierlich geformt und weist keine Stufen auf, wodurch eine gleichmäßige, nicht ruckhafte Bewegung sichergestellt wird. Die Aufnahme 18 und die Ausbuchtung 15 sind derart geformt, dass sie im Wesentlichen auf einer Ebene senkrecht zu einer Länge des Greifarms liegen. Dadurch ist eine platzsparende Anordnung des Schließmittels 6 und des Steuernockens 11 als Öffnungsmittel, insbesondere in Kombination mit der Ausbuchtung 15, möglich.

Das Schließmittel 6 zum Bewegen des Greifabschnitts 5 des Greifarms 2 von der Öffnungsstellung in die Greifstellung ist ein Magnet 19, der in der Aufnahme 18 angeordnet bzw. eingesetzt ist. Die Aufnahme 18 ist zwischen der Bohrung 10 und dem Greifabschnitt 5 angeordnet und ist als ein Sackloch für den Magneten 19 ausgebildet, in welches der Magnet 19 beim Zusammenbau des Greifarms 2 einsetzbar ist. Das Sackloch weist eine zylinderförmige Vertiefung auf, in die der Magnet 19, vorzugsweise in Zylinderform, eingesetzt ist bzw. werden kann. Der Magnet 19 ist zusätzlich mit einer Kunststoffschicht ummantelt. Ebenso ist der Greifarm 2 einstückig aus Kunststoff, insbesondere aus faserverstärktem Polyetheretherketon (PEEK), gefertigt. Der Greifarm 2 weist einen Verzahnungsabschnitt 20 mit koaxial um die Bohrung 10 angeordneten Zähnen 21 zum synchronen Schwenken des Greifarms 2 mit einem korrespondierend angeordneten Greifarm 3 in der Greifeinrichtung 1 auf. Insbesondere haben die Zähne alle die gleiche Höhe und/oder Form. Der Greifabschnitt 5 dient in einer Greifstellung der Greifeinrichtung zum Halten oder Führen des Behälters, wobei der Führungsabschnitt 14 zwischen Greifabschnitt 5 und der Bohrung 10 angeordnet ist. Des Weiteren weist der Greifabschnitt 5 insbesondere wenigstens zwei Stellen auf, die in der Greifstellung mit dem zu haltenden Behälter in Kontakt sind und auf Grund durch Kraftschluss den Behälter am Herausfallen hindern. Die wenigstens zwei Stellen zeichnen sich dadurch aus, dass sie an der Greifarminnenseite 23 im Greifabschnitt 5 erhoben sind.

Eine Steuerachse 7 des Steuernockens 11 ist derart angeordnet, dass sie in einer Ebene, insbesondere in einer Linie, mit der Aufnahme 18 und der Ausbuchtung 15 liegt. Eine Querschnittslinie A verläuft durch einen Mittelpunkt des Steuernockens 11 und zeigt den Blickwinkel auf den in der Figur 2 gezeigten Querschnitt der Greifeinrichtung 1. Die Lagerbolzen 32 der beiden Greifarme 2 und 3 und der Steuernocken 11 sind auf einem Trägerelement 31 befestigt. Zum Drehen des Steuernockens 11 wird ein unterhalb des Trägerelements 31 angeordnetes mit einer Achse des Steuernockens verbundenes Aktivierungselement 13, auch Nockensteuerelement genannt, verwendet. Das Aktivierungselement 13 weist ein hackenförmiges Teil auf, das einen Bolzen beim Rotieren einer - hier nicht dargestellten - Transportvorrichtung 28 mit zahlreichen Greifeinrichtungen 1 erfassen, zusammenwirken bzw. mitrotieren und wieder freigeben kann. Dabei wechselt die Greifeinrichtung von der Öffnungsstellung in die Greifstellung oder umgekehrt. Möglich ist auch, dass während des Zusammenwirkens von Bolzen und Aktivierungselement 13 die Greifeinrichtung von der Greifstellung, in die Öffnungsstellung, in der ein Behälter zwischen die Greifabschnitte 5 gelangt, und dann wieder in die Greifstellung wechselt, um einen Behälter zu greifen und zu halten. Die Befestigungsschraube 33 dient dem Befestigen des Trägerelements 31 auf einer insbesondere größeren - hier nicht dargestellten - Trägerplatte 30 einer Transportvorrichtung 28. Auf Grund der Tatsache, dass der Steuernocken 11 die Greifarme 2 und 3 minimal auslenkt, befindet sich die Greifeinrichtung 1 in der Greifstellung.

In Figur 2 wird die Greifeinrichtung 1 mit einem erfindungsgemäßen Greifarm 3 im Querschnitt dargestellt. Neben den zuvorgenannten Merkmalen aus Figur 1 der Greifeinrichtung 1 und des Greifarms 3 sind eine Steuerachse 7 des Steuernockens 11 und eine Schwenkachse 4 des Greifarms, die durch die Symmetrieachse des Lagerbolzens 32 bzw. der Bohrung 10 definiert wird, zu sehen. Eine Oberseite 8 und eine Unterseite 9 erstrecken sich im Wesentlichen eben und parallel zueinander über den gesamten Greifarm 3, insbesondere von der Spitze bis zur Wand der Bohrung 10. Lediglich die Aufnahme 18, insbesondere das Sackloch, bildet eine runde Ausbuchtung auf der Oberseite 8 und/oder der Unterseite 9, die auf der zylinderförmigen Vertiefung basiert.

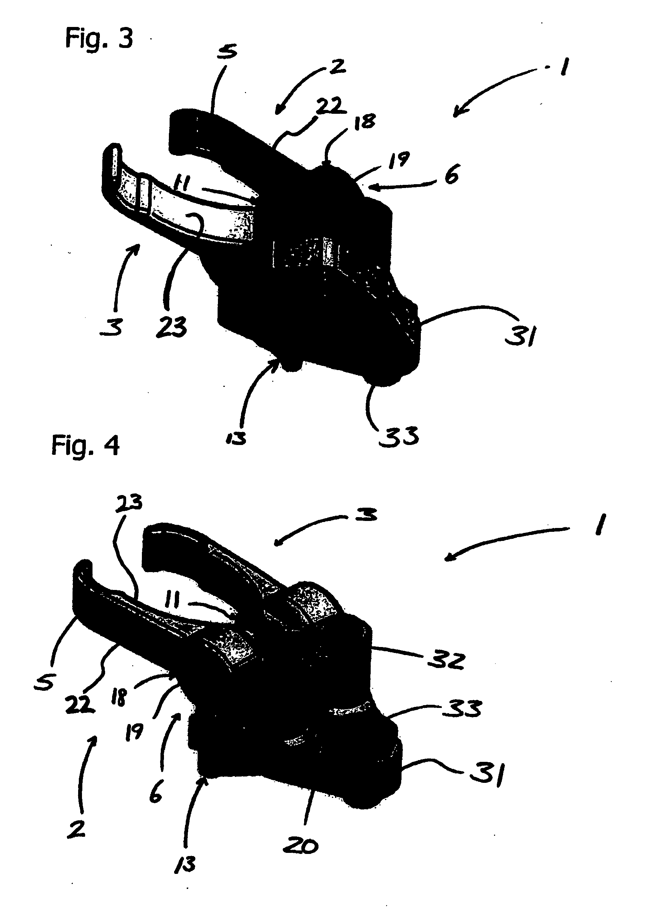

Figur 3 und 4 zeigen eine erste und zweite perspektivische Ansicht der Greifeinrichtung 1 in der Greifstellung mit den zuvorgenannten Merkmalen der Greifeinrichtung 1 und der Greifarme 2 und 3 aus Figur 1 und 2. An der Greifarmaußenseite 22 sind sowohl eine Ausbuchtung durch die Aufnahme 18 als auch die planare Anordnung der Grundfläche des Magneten 19 mit der Ausbuchtung gut erkennbar.

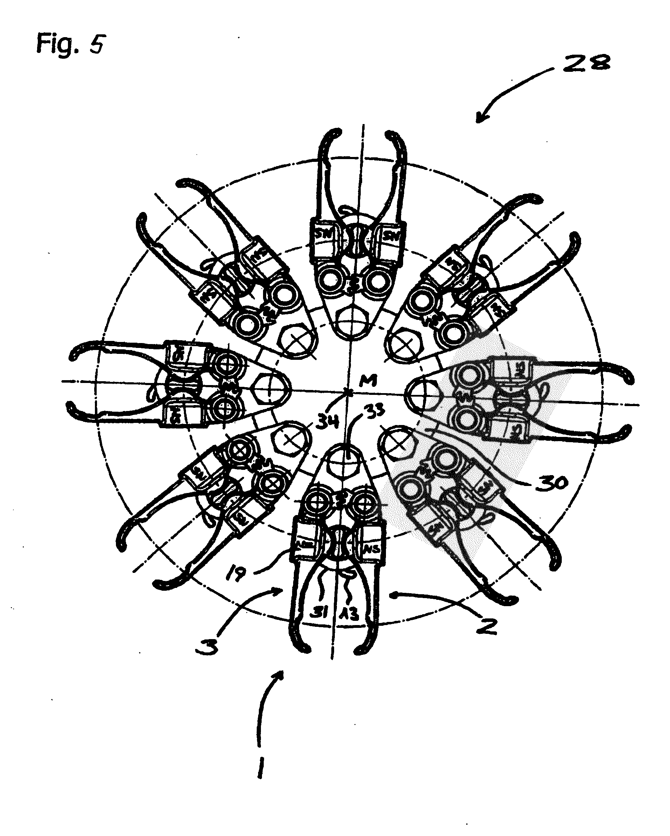

In Figur 5 ist eine erfindungsgemäße Transportvorrichtung 28 mit acht Greifeinrichtungen 1 in einer Draufsicht dargestellt. Der Anschaulichkeit halber wird in der Figur nur eine Greifeinrichtung 1 beschrieben, deren Beschreibung jedoch auf die anderen sieben Greifeinrichtungen zutrifft. Es wird auch darauf verwiesen, dass die Greifeinrichtung 1 der in Figur 1 gezeigten Greifeinrichtung entspricht, die auf einem Trägerelement 31 angeordnet ist. Das Trägerelement 31 ist mittels einer Befestigungsschraube 33 am Rand einer Trägerplatte 30 montiert. Die Befestigungsschrauben 33 der Trägerelemente 31 sind konzentrisch um einen Mittelpunkt M der Trägerplatte 30, durch den eine Drehachse 34 der Transportvorrichtung 28 geht, angeordnet. Die Transportvorrichtung 28 rotiert um die Drehachse 34, die gleichzeitig die Symmetrieachse der Transportvorrichtung 28 ist. Die Trägerelemente 31 sind im gleichen Abstand zueinander, strahlenförmig um und im gleich Abstand zum Mittelpunkt M angeordnet. Bei der Anordnung der Greifeinrichtungen 1 der Transportvorrichtung 28 ist die Polarisierung der einzelnen Magnete 19 angezeigt.

Während in einer Greifeinrichtung 1 die zwei Magnete 19 der Greifarme 2 und 3 mit Nord-Süd polarisiert sind, sind die zwei Magnete der Greifarme des direkt benachbarten Greifarmpaars mit Süd-Nord polarisiert. Dadurch stoßen sich die benachbarten Greifarme zweier nebeneinander angeordneter Greifeinrichtungen 1 immer ab, während sich die Greifarme innerhalb einer Greifeinrichtung 1 stets anziehen. Um die gleiche Wirkung mit gleicher Kraft bei allen Greifeinrichtungen zu ermöglichen, ist die Magnetkraft aller Magnete 19 und der radiale Abstand zwischen den Greifeinrichtungen gleich und eine gerade Anzahl an Greifeinrichtungen auf der Trägerplatte 30 konzentrisch angeordnet.

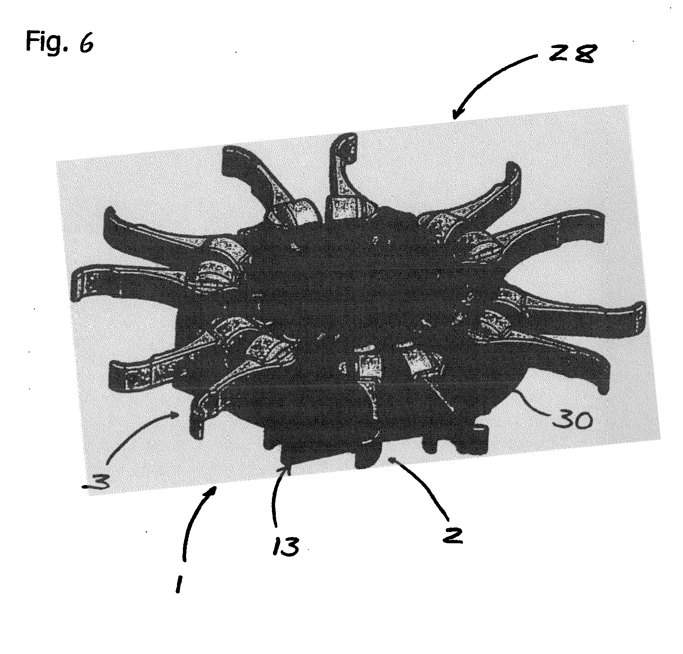

Figur 6 zeigt eine perspektivische Ansicht der erfindungsgemäßen und bezüglich Figur 5 beschriebenen Transportvorrichtung 28. In diesem Fall sind alle sechs Greifeinrichtungen 1 in der Öffnungsstellung. Die Magnete 19 der benachbarten Greifvorrichtungen 1 kommen sich sehr nah und erhöhen dadurch die Schließkraft des Schließmittels auf Grund der Abstoßung.

In Figur 6 ist auch erkennbar, dass die Lagerbolzen 32 und die Steuernocke 11 mit dem Aktivierungselement 13 direkt in die Trägerplatte 30 montiert sind und nicht mit Hilfe eines Trägerelements 31.

### Bezugszeichenliste

- 1: Greifeinrichtung
- 2: Greifarm
- 3: Korrespondierender Greifarm
- 4: Schwenkachse
- 5: Greifabschnitt
- 6: Schließmittel
- 7: Steuerachse
- 8: Oberseite
- 9: Unterseite
- 10: Bohrung
- 11: Steuernocken
- 13: Aktivierungselement
- 14: Führungsabschnitt
- 15: Ausbuchtung
- 18: Aufnahme
- 19: Magnet
- 20: Verzahnungsabschnitt
- 21: Zahn
- 22: Greifarmaußenseite
- 23: Greifarminnenseite
- 28: Transportvorrichtung
- 30: Trägerplatte
- 31: Trägerelement
- 32: Lagerbolzen
- 33: Befestigungsschraube
- 34: Drehachse

## Patentansprüche

1. Greifarm (2) für eine Greifeinrichtung (1) zum Greifen, Halten und/oder Führen von insbesondere kleinen und im Wesentlichen rund geformten Behältern, wobei der Greifarm (2) wenigstens eine Bohrung (10) zur zumindest teilweisen Aufnahme eines Lagerbolzens (32) aufweist, mittels dessen der Greifarm (2) in der Greifeinrichtung (1) schwenkbar, insbesondere schwenkbar befestigbar ist, wobei die Greifeinrichtung (1) wenigstens einen drehbar gelagerten Steuernocken (11) aufweist,
**dadurch gekennzeichnet, dass**
der Greifarm (2) mittels des Steuernockens (11) von einer Greifstellung in eine Öffnungsstellung bewegbar ist
und wenigstens eine Aufnahme (18) für ein Schließmittel das einen Magnet (6) aufweist, mittels dessen der Greifarm (2) von der Öffnungsstellung in die Greifstellung bewegbar ist, wobei die Aufnahme (18) derart gestaltet ist, dass das Schließmittel (6) von einer Greifarmaußenseite (22) aus in die Aufnahme : (18) einsetzbar ist, und wobei der Magnet (19) eines dem Greifarm (2) in der Greifeinrichtung (1) gegenüberliegenden, korrespondierenden Greifarms (3) magnetisch komplementär gepolt ist.

2. Greifarm (2) nach Anspruch 1,
**dadurch gekennzeichnet, dass**
der Greifarm (2) wenigstens einen Greifabschnitt (5) aufweist, wobei der Greifabschnitt (5) derart beschaffen und ausgebildet ist, dass er in der ersten Stellung, insbesondere der Greifstellung, zum Halten oder Führen eines Behälters geeignet ist und dienen kann.

3. Greifarm (2) nach Anspruch 1 oder 2,
**dadurch gekennzeichnet, dass**
der Greifarm (2) wenigstens einen Führungsabschnitt (14) mit wenigstens einer an der Greifarminnenseite (23) angeordneten Ausbuchtung (15) aufweist, die zum Zusammenwirken mit dem wenigstens einen Steuernocken (11) angepasst ist, wobei vorzugsweise der wenigstens eine Führungsabschnitt (14) zwischen dem wenigstens einen Greifabschnitt (5) und der wenigstens einen Bohrung (10) angeordnet ist.

4. Greifarm (2) nach einem der vorhergehenden Ansprüche,
**dadurch gekennzeichnet, dass**
das Schließmittel (6) zum Bewegen des wenigstens einen Greifabschnitts (5) des Greifarms (2) von der Öffnungsstellung in die Greifstellung wenigstens einen mit einer Kunststoffschicht ummantelten Magneten (19) aufweist.

5. Greifarm (2) nach Anspruch 4,
**dadurch gekennzeichnet, dass**
der Greifarm (2) zwischen der wenigstens einen Bohrung (10) und dem wenigstens einen Greifabschnitt (5) wenigstens ein Sackloch als die wenigstens eine Aufnahme (18) für den wenigstens einen Magneten (19) aufweist, in welches der wenigstens eine Magnet (19) beim Zusammenbau des Greifarms (2) einsetzbar ist.

6. Greifarm (2) nach einem der vorhergehenden Ansprüche,
**dadurch gekennzeichnet, dass**
der Greifarm (2) einstückig aus Kunststoff, insbesondere aus faserverstärktem Kunststoff, vorzugsweise aus faserverstärktem Polyetheretherketon (PEEK), gefertigt ist.

7. Greifarm (2) nach einem der vorhergehenden Ansprüche,
**dadurch gekennzeichnet, dass**
der Greifarm (2) wenigstens einen Verzahnungsabschnitt (20) mit zumindest segmentweise koaxial um die wenigstens eine Bohrung (10) angeordneten Zähnen (21) zum synchronen Schwenken des Greifarms (2) mit einem korrespondierend angeordneten Greifarm aufweist.

8. Greifeinrichtung (1) mit wenigstens einem Greifarm (2) nach einem der Ansprüche 1 bis 7, die zum Greifen, Halten und/oder Führen von insbesondere kleinen und im Wesentlichen rund geformten Behältern dient, wobei die Greifeinrichtung (1) wenigstens einen drehbar gelagerten Steuernocken (11) aufweist, welcher derart beschaffen und ausgebildet ist, dass mittels des Steuernockens (11) bzw. einer Drehung des Steuernockens (11) der Greifarm (2) von wenigstens einer ersten Stellung, einer Greifstellung, in wenigstens eine zweite Stellung, eine Öffnungsstellung, und/oder umgekehrt bewegbar ist.

9. Greifeinrichtung (1) nach Anspruch 8,
**dadurch gekennzeichnet, dass**
die Greifeinrichtung (1) wenigstens zwei Greifarme (2,3) nach einem der Ansprüche 1 bis 7 aufweist und dass zwischen den wenigstens zwei Aufnahmen (18) des Greifarmpaars der wenigstens eine Steuernocken (11) angeordnet ist.

10. Transportvorrichtung (28) zum Transportieren von Behältern mit einem oder mehreren Greifarmen (2) nach einem der Ansprüche 1 bis 7 und/oder einem oder mehreren Greifeinrichtungen (1) nach Anspruch 8 oder 9.

11. Transportvorrichtung (28) nach Anspruch 10,
**dadurch gekennzeichnet, dass**
die Greifarme (2) paarweise miteinander angeordnet und jeweils komplementär zueinander ausgebildet sind, so dass jeweils zwei Greifarminnenseiten (23) und zwei Greifarmaußenseiten (22) einander zugewandt sind und/oder ein Greifarmpaar gebildet wird, wobei ein Greifarmpaar wenigstens zwei Greifarme (1) umfasst, insbesondere wenigstens zwei Greifarme (1) nach einem der Ansprüche 1 bis 7 umfasst.

12. Transportvorrichtung (28) nach Anspruch 10 oder 11,
**dadurch gekennzeichnet, dass**
die Greifarme (2) und/oder die Greifeinrichtungen (1) kreisförmig um eine Drehachse der Transportvorrichtung (28) angeordnet sind und/oder dass ein Aktivierungselement (13) und eine Trägerplatte (30) vorgesehen sind, wobei der/die Lagerbolzen (32) und die Steuernocke(n) mit dem Aktivierungselement (13) direkt in/an die/der Trägerplatte (30) angeordnet bzw. montiert.

13. Transportvorrichtung (28) nach einem der Ansprüche 10 bis 12,
**dadurch gekennzeichnet, dass**
die Magnete (19) der Greifarme (2) derart gepolt sind, dass sich die benachbarten Greifarme (2) zweier nebeneinander angeordneten Greifarmpaare oder Greifeinrichtungen (1) abstoßen und dass sich die Greifarme (2) eines Greifarmpaares oder einer Greifeinrichtung (1) anziehen.

14. Verfahren zur Herstellung eines Greifarms (2) gemäß einem der Ansprüche 1 bis 7, wobei der Greifarm (2) einstückig in einem Spritzgussverfahren aus Kunststoff hergestellt wird, wobei zur Fertigstellung des Greifarms (2) wenigstens ein Magnet (19) in die wenigstens eine Aufnahme (18) eingesetzt wird.

15. Verfahren zum Transportieren wenigstens eines Behälters mit einem Greifarm (2) und/oder einer Greifeinrichtung (1) und/oder einer Transportvorrichtung (28) gemäß einer der vorhergehenden Ansprüche, wobei zum Überführen in die Greifstellung sich die Schließmittel eines Greifarmpaares umfassend wenigstens zwei Greifarme (1), insbesondere wenigstens zwei Greifarme (1) nach einem der Ansprüche 1 bis 7 anziehen und die Schließmittel zweier benachbarter Greifarme (2) zweier nebeneinander angeordneten Greifarmpaare abstoßen.

## Claims

1. A gripper arm (2) for a gripping device (1) for gripping, holding and/or guiding in particular small and substantially rounded containers, wherein the gripping device (1) comprises at least one bore (10) for at least partially receiving a bearing bolt (32) by means of which the gripper arm (2) is pivotable in the gripping device (1), in particular pivotably mountable, wherein the gripping device (1) comprises at least one rotatably mounted control cam (11),
**characterized in that**
the gripper arm (2) can be moved from a gripping position to an open position and has at least one receiving element (18) for a closing means (6) comprising a magnet by means of which the gripper arm (2) can be moved from the open position into the gripping position, wherein the receiving element (18) is designed such that the closing means (6) can be inserted into the receiving element (18) from the outer side (22) of the gripper arm, and wherein the magnet (19) is magnetically polarized complementary to an opposing corresponding gripper arm (3) in the gripping device (1).

2. The gripper arm (2) according to claim 1,
**characterized in that**
the gripper arm (2) comprises at least one gripping section (5), wherein the gripping section (5) is provided and designed so as to be suited and can serve to hold or guide a container when in the first position, particularly the gripping position.

3. The gripper arm (2) according to claim 1 or 2,
**characterized in that**
the gripper arm (2) comprises at least one guide section (14) having at least one protrusion (15) arranged on the inner side (23) of the gripper arm which is adapted to cooperate with the at least one control cam (11), wherein the at least one guide section (14) is preferably arranged between the at least one gripping section (5) and the at least one bore (10).

4. The gripper arm (2) according to any one of the preceding claims,
**characterized in that**
the closing means (6) for moving the at least one gripping section (5) of the gripper arm (2) from the open position into the gripping position comprises at least one plastic-coated magnet (19).

5. The gripper arm (2) according to claim 4,
**characterized in that**
the gripper arm (2) has at least one blind hole as the at least one receiving element (18) for the at least one magnet (19) between the at least one bore (10) and the at least one gripping section (5) into which the at least one magnet (19) can be inserted during the assembly of the gripper arm (2).

6. The gripper arm (2) according to any one of the preceding claims,
**characterized in that**
the gripper arm (2) is integrally made of plastic, particularly fiber-reinforced plastic, preferably fiber-reinforced polyetheretherketone (PEEK).

7. The gripper arm (2) according to any one of the preceding claims,
**characterized in that**
the gripper arm (2) comprises at least one toothed section (20) having teeth (21) arranged coaxially at least in segments around the at least one bore (10) to synchronously pivot the gripper arm (2) together with a correspondingly arranged gripper arm.

8. A gripping device (1) comprising at least one gripper arm (2) according to any one of claims 1 to 7, serving to grip, hold and/or guide in particular small and substantially rounded containers, wherein the gripping device (1) comprises at least one rotatably mounted control cam (11) which is provided and designed such that by means of said control cam (11), or a rotation of the control cam (11) respectively, the gripper arm (2) can be moved from at least one first gripping position into at least one second open position or vice versa.

9. The gripping device (1) according to claim 8,
**characterized in that**
said gripping device (1) comprises at least two gripper arms (2, 3) in accordance with any one of claims 1 to 7 and that at least one control cam (11) is arranged between the at least two receiving elements (18) of the pair of gripper arms.

10. A transport mechanism (28) for transporting containers which has one or more gripper arms (2) in accordance with any one of claims 1 to 7 and/or one or more gripping devices (1) in accordance with claim 8 or 9.

11. The transport mechanism (28) according to claim 10,
**characterized in that**
the gripper arms (2) are arranged in pairs and of respectively complementary design such that two respective inner sides (23) of the gripper arms and two respective outer sides (22) of the gripper arms face each other and/or form a gripper arm pair, wherein one gripper arm pair comprises at least two gripper arms (1), particularly at least two gripper arms (1) in accordance with one of claims 1 to 7.

12. The transport mechanism (28) according to claim 10 or 11,
**characterized in that**
the gripper arms (2) and/or the gripping devices (1) are arranged in a circle around a rotational axis of the transport mechanism (28) and/or that an activating element (13) and a carrier plate (30) are provided, wherein the bearing bolt(s) (32) and the control cam(s) are disposed or mounted directly in/on the carrier plate(s) (30) with the activating element (13).

13. The transport mechanism (28) according to any one of claims 10 to 12,
**characterized in that**
the magnets (19) of the gripper arms (2) are polarized such that neighboring gripper arms (2) of two adjacently arranged gripper arm pairs or gripping devices (1) repel and the gripper arms (2) of one gripper arm pair or one gripping device (1) attract.

14. A method for manufacturing a gripper arm (2) in accordance with any one of claims 1 to 7, wherein the gripper arm (2) is made of one plastic injection-molded piece, wherein at least one magnet (19) is inserted into the at least one receiving element (18) to complete the gripper arm (2).

15. A method for transporting at least one container by a gripper arm (2) and/or a gripping device (1) and/or a transport mechanism (28) according to any one of the preceding claims, wherein to switch into the gripping position, the closing means of one gripper arm pair comprising at least two gripper arms (1), particularly at least two gripper arms (1) in accordance with one of claims 1 to 7, attract one another and the closing means of two neighboring gripper arms (2) of two adjacently arranged gripper arm pairs repel.

## Revendications

1. Bras de préhension (2) pour un dispositif de préhension (1) destiné à prendre, à tenir et/ou à guider des récipients, en particulier petits et de forme sensiblement ronde, dans lequel le bras de préhension (2) comporte au moins un perçage (10) pour loger au moins partiellement un goujon de montage (32), au moyen duquel le bras de préhension (2) peut être fixé dans le dispositif de préhension (1) de manière à pouvoir pivoter, dans lequel le dispositif de préhension (1) comprend au moins une came de commande (11) montée rotative,
**caractérisé en ce que**
le bras de préhension (2) est déplaçable au moyen de la came de commande (11) depuis une position de préhension jusque dans une position ouverte, et comporte au moins un logement (18) pour un moyen de fermeture (6) qui comprend un élément au moyen duquel le bras de préhension (2) est déplaçable depuis la position ouverte jusque dans la position de préhension, dans lequel le logement (18) est conçu de telle façon que le moyen de fermeture (6) est susceptible d'être mis en place dans le logement (18) depuis un côté extérieur (22) du bras de préhension, et dans lequel l'aimant (19) d'un bras de préhension (3) correspondant opposé aux bras de préhension (2) dans le dispositif de préhension (1), présente une polarité magnétique complémentaire.

2. Bras de préhension (2) selon la revendication 1,
**caractérisé en ce que** le bras de préhension (2) comprend au moins une portion de préhension (5), ladite portion de préhension (5) étant conçue et réalisée de telle façon que, dans la première position, en particulier la position de préhension, il convient et peut servir à tenir ou à guider un récipient.

3. Bras de préhension (2) selon la revendication 1 ou 2,
**caractérisé en ce que** le bras de préhension (2) comprend au moins une portion de guidage (14) avec au moins un creux (15) agencé sur le côté intérieur du bras de préhension (23), qui est ajusté pour coopérer avec ladite au moins une came de commande (11), et de préférence ladite au moins une portion de guidage (14) est agencée entre ladite au moins une portion de préhension (5) et ledit au moins un perçage (10).

4. Bras de préhension (2) selon l'une des revendications précédentes,
**caractérisé en ce que** le moyen de fermeture (6) comprend au moins un élément (19) enveloppé avec une couche de matière plastique pour déplacer ladite au moins une portion de préhension (5) du bras de préhension (2) depuis la position ouverte jusque dans la position de préhension.

5. Bras de préhension (2) selon la revendication 4,
**caractérisé en ce que** le bras de préhension (2) comprend, à titre dudit au moins un logement (18) pour ledit au moins un élément (19), au moins un trou borgne entre ledit au moins un perçage (10) et ladite au moins une portion de préhension (5), logement dans lequel ledit au moins un élément (19) peut être mis en place lors de l'assemblage du bras de préhension (2).

6. Bras de préhension (2) selon l'une des revendications précédentes,
**caractérisé en ce que** le bras de préhension (2) est réalisé d'une seule pièce en matière plastique, de préférence en polyéther-éther-cétone renforcée par des fibres (PEEC).

7. Bras de préhension (2) selon l'une des revendications précédentes,
**caractérisé en ce que** le bras de préhension (2) comprend au moins une portion dentée (20) avec des dents (21) agencées au moins par segment de manière coaxiale autour dudit au moins un perçage (10), pour le pivotement synchrone du bras de préhension (2) avec un bras de préhension agencé en correspondance.

8. Dispositif de préhension (1) comprenant au moins un bras de préhension (2) selon l'une des revendications 1 à 7, qui sert à prendre, à tenir et/ou à guider des récipients, en particulier petits et de forme sensiblement ronde, dans lequel le dispositif de préhension (1) comprend au moins une came de commande (11) montée en rotation, qui est conçue et réalisée de telle façon qu'au moyen de la came de commande (11), ou respectivement d'une rotation de la came de commande (11), le bras de préhension (2) est déplaçable depuis au moins une première position, c'est-à-dire une position de préhension, jusque dans au moins une seconde position, c'est-à-dire une position ouverte, et/ou inversement.

9. Dispositif de préhension (1) selon la revendication 8,
**caractérisé en ce que** le dispositif de préhension (1) comprend au moins deux bras de préhension (2, 3) selon l'une des revendications 1 à 7, et **en ce que** ladite au moins une came de commande (11) est agencée entre lesdits au moins deux logements (18) de la paire de bras de préhension.

10. Dispositif de transport (28) pour le transport de récipients avec un ou plusieurs bras de préhension (2) selon l'une des revendications 1 à 7, et/ou avec un ou plusieurs dispositifs de préhension (A) selon la revendication 8 ou 9.

11. Dispositif de transport (28) selon la revendication 10,
**caractérisé en ce que** les bras de préhension (2) sont agencés par paires les uns avec les autres et sont réalisés respectivement de manière complémentaire les uns aux autres, de sorte que deux côtés intérieurs (23) et deux côtés extérieurs (22) respectifs des bras de préhension sont tournés l'un vers l'autre et/ou **en ce qu'**une paire de bras de préhension est formée, de sorte qu'une paire de bras de préhension comprend au moins deux bras de préhension, en particulier au moins deux bras de préhension (1) selon l'une des revendications 1 à 7.

12. Dispositif de transport (28) selon la revendication 10 ou 11,
**caractérisé en ce que** les bras de préhension (2) et/ou les dispositifs de préhension (1) sont agencés en forme de cercle autour d'un axe de rotation du dispositif de transport (28) et/ou **en ce qu'**un élément d'activation (13) et une plaque porteuse (30) sont prévus, dans lequel le/les goujon(s) de montage (32) est la/les came(s) de commande avec l'élément d'activation (13) est/sont agencé(e)(s) ou monté(e)(s) directement dans/sur la/les plaque(s) porteuse(s) (30).

13. Dispositif de transport (28) selon l'une des revendications 10 à 12,
**caractérisé en ce que** les aimants (19) des bras de préhension (2) ont une polarité telle que les bras de préhension (2) voisins de deux paires de bras de préhension agencées l'une à côté de l'autre ou de deux dispositifs de préhension (1) agencés l'un côté de l'autre se repoussent, et **en ce que** les bras de préhension (2) d'une paire de bras de préhension ou d'un dispositif de préhension (1) s'attirent.

14. Procédé pour la réalisation d'un bras de préhension (2) selon l'une des revendications 1 à 7, dans lequel le bras de préhension (2) est réalisé d'une seule pièce en matière plastique dans une procédure de coulée par injection, dans lequel on met en place au moins un élément (19) dans ledit au moins un logement (18) pour la réalisation du bras de préhension (2).

15. Procédé pour transporter au moins un récipient avec un bras de préhension (2) et/ou un dispositif de préhension (1) et/ou un dispositif de transport (28) selon l'une des revendications précédentes, dans lequel, pour le passage dans la position de préhension, les moyens de fermeture d'une paire de bras de préhension, incluant au moins deux bras de préhension (1), en particulier au moins deux bras de préhension (1) selon l'une des revendications à 7, s'attirent, et les moyens de fermeture de deux bras de préhension voisins (2) de deux paires de bras de préhension agencés l'une à côté de l'autre se repoussent.
